(19) Europäisches Patentamt
European Patent Office
Office européen des brevets

(11) **EP 4 579 227 A1**

(12) **EUROPEAN PATENT APPLICATION**
published in accordance with Art. 153(4) EPC

(43) Date of publication:
**02.07.2025 Bulletin 2025/27**

(21) Application number: **22955905.9**

(22) Date of filing: **23.08.2022**

(51) International Patent Classification (IPC):
**G01N 22/00** *(2006.01)* **H01Q 1/36** *(2006.01)*
**G01S 13/88** *(2006.01)*

(52) Cooperative Patent Classification (CPC):
**G01N 22/00;** G01S 13/88; H01Q 1/36

(86) International application number:
**PCT/BR2022/050330**

(87) International publication number:
**WO 2024/040313 (29.02.2024 Gazette 2024/09)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicants:
• **META - Soluçôes Em Segurança Ltda.**
**13260-000 Morungaba - SP (BR)**
• **Instituto Federal de Educação, Ciência**
**E Tecnologia de São Paulo - IFSP**
**01109-010 São Paulo (BR)**

(72) Inventors:
• **OLIVEIRA, Alexandre Maniçoba De**
**11705-260 Praia Grande - SP (BR)**
• **OLIVEIRA NETO, Antonio Mendes De**
**18120-000 Mairinque - SP (BR)**
• **FRANÇA FILHO, Antonio Rebouças De**
**13260-000 Morungaba - SP (BR)**

(74) Representative: **reuteler & cie SA**
**Chemin de la Vuarpillière 29**
**1260 Nyon (CH)**

(54) **DEVICE FOR COMPARING THE PATTERN OF DIELECTRIC MATERIALS USING AN ANTIPODAL VIVALDI ANTENNA WITH AN EXPONENTIAL EDGE**

(57) It consists of a Vivaldi (4) Palm Tree class antenna connected to port 1 (8) of a vector network analyzer (5) by a coaxial cable (9), and in front of the Vivaldi (4) Palm Tree class antenna, a test tube (10) containing dielectric material (liquid under analysis) is inserted. This material is identified by its dielectric characteristics through the analysis of the reflection coefficient of an ultra-wideband (UWB) signal that ranges from 1500 to 2500 MHz with a power of 1 dBm.

FIG. 1

**Description**

**INTRODUCTION**

The present application for patent of invention refers to an unprecedented **DEVICE FOR COMPARING DIELECTRIC MATERIAL PATTERNS USING ANTIPODAL VIVALDI ANTENNA WITH AN EXPONENTIAL EDGE,** which uses an ultra-wide band (UWB) antenna, 1500-2500 MHz, Vivaldi Palm Tree in radiant near-field microwaves to identify the dielectric characteristics through the reflection of the signal applied in a liquid in fluid dielectric material, solid or colloidal.

**FIELD OF APPLICATION**

The field of application of the invention is in quality control in the oil and gas industries, as well as pharmaceuticals, cosmetics, paints, and food sectors, through identification by means of the dielectric characteristics of dielectric materials.

**PERSUASION**

Persons skilled in the art know that to understand the differential factor between the use of the Vivaldi Palm Tree antenna and other antennas, such as Horn and Vivaldi pattern, it is necessary to clarify the concept of radiated fields, whose power is attenuated directly proportional to the exponential increase in the distance from the point of analysis to the phase center of the antenna. In other words, the farther away, the greater the loss of signal power, in an exponential order. In turn, for the concept of the electromagnetic field of a directive antenna, as is the case with the Vivaldi Palm Tree, there are three regions of different natures that must be considered: reactive near field, radiating near field, and far field regions [1 - 4].

The spatial region, just in front of the antenna, a near-field region, is divided into two specific regions. The first is the reactive near-field region, which extends from the antenna's phase center to the distance of $\lambda/(2\pi)$. In this region, the electric fields are still under the influence of electric charges and their energy decreases exponentially with the distance from the antenna's phase center, so this region does not undergo significant influences from the dielectric medium to the extent of being used as a sensor. In addition to this region, up to the distance $(2D^2)/\lambda$, where D is the largest dimension of the antenna, which in the case of Vivaldi Palm Tree Class antennas, is up to three times smaller than conventional Vivaldi antennas, there is the reactive near field region, where electric fields are already radiant in nature and the influence of electric charges, originating from the surface currents on the antenna, is partial. Thus, the angular distribution of the radiated energy still depends on the distance from the antenna. However, it becomes an ideal region for non-invasive sensing through the interactions of the signal with the dielectric medium under test [5]. From this region, we have the far-field region, where the angular distribution of the radiated energy is predominantly independent of the distance to the antenna, that is, it is no longer influenced by it [6].

In this context, new technologies that make it possible to use the Vivaldi Palm Tree antenna to operate as a sensor are welcome in the segment in question.

**STATE OF THE ART**

The current state of the art anticipates some patent documents that address devices for non-invasive measurements, such as CN105298489 A entitled *"CONTINUOUS MEASUREMENT METHOD OF DIELECTRIC CONSTANT FREQUENCY DISPERSION CHARACTERISTIC AT WIDE SPECTRUM OF WELL-CLOSE STRATUM"* - which presents a technique for identifying the dielectric constant in the UWB spectrum of strata. The technique aims to identify water and oil saturation in strata. Through differences in the results, it is possible to estimate the amount of water and oil present. The technique focuses on identifying water and oil, where a researcher analyzes and identifies the frequencies associated with water and oil.

The technique focuses on identifying water and oil, while the equipment proposed herein identifies the differences between a reference pattern, acquired in an automated way, and the acquired pattern, allowing the identification of adulteration or confirmation that the product matches the reference produced.

The document US5448501 A entitled "ELECTRONIC LIFE DETECTION SYSTEM" - describes a technique for identifying people or animals in an environment. The appropriate frequencies, according to the patent, are in the range of 1.3GHz to 1.6GHz. Applying the fast Fourier transform (FFT), a return electromagnetic spectrum is obtained and compared with a stored pattern, making it possible to identify whether a human or animal is present in the environment.

The solution in the document above is linked to a VNA and an antenna that collects reflection coefficients in the far field, resulting from interactions with animals and people located in a region distant from the antenna.

The document US8524445 B2 entitled *"DETECT AND IDENTIFY VIRUS BY THE MICROWAVE ABSORPTION SPECTROSCOPY"* describes a process for identifying viruses through the analysis of the $S_{11}$ and $S_{21}$ curves to characterize the resonant frequencies of certain groups of viruses. The characterization of the resonant frequencies of certain groups of viruses is done manually. Knowing these frequencies, it is possible to quickly determine which types of viruses are present in the sample.

The differences between this patent and the proposed device lie in the way the signal is collected and processed. A resonant frequency is a frequency where the material analyzed absorbs the electromagnetic wave, causing the parameter $S_{21}$ to show an abrupt drop, indicating the absorption of the electromagnetic signal.

The document WO2006031155 A2 entitled *"METHOD OF EXPLOSIVES DETECTION AND IDENTIFICATION"* - describes a technique for detecting explosives, which uses signals at frequencies from 300MHz to 150GHz. The reflected signal is analyzed by verifying its amplitude and phase change. Materials have different absorptions. By knowing the absorption frequencies of certain explosives, it is possible to indicate their presence. This technique relies on human interference to recognize the frequencies, which are not described in the document, and it is necessary for a researcher to identify the frequencies of the explosives that will be analyzed. The main difference between this patent and the one proposed in this document is the automated reading process, which does not depend on the presence of a researcher for recognizing certain frequencies.

There is no way to form and store a pattern in an external program for later use in comparison processes.

The document CN103630555 A entitled *"METHOD FOR DETECTING LIQUID HAZARDOUS SUBSTANCES BY ADOPTING MICROWAVE MULTI-FREQUENCY- POINT VECTOR DETECTION"* - describes a process for identifying hazardous substances by collecting the reflection coefficient at frequencies distributed in the S, C, and X bands.

The equipment in the above document operates by acquiring the reflection and phase change coefficient, used only in hazardous liquids, allowing recognition in a generic way. Due to the sensitivity of the Vivaldi Palm antenna of the application now filed, optimized to collect data in the radiant near field, the sensitivity of the acquired parameter $S_{11}$ (reflection coefficient x frequency), once collected and processed, produces a pattern that is unique to the batch of the material produced. If a similar material, but from another batch, is analyzed, due to the sensitivity of the antenna, it will generate another $S_{11}$ parameter that is slightly different. This is enough to identify that the two materials were not produced together, treating them as different (albeit similar) products. Only materials from the same batch will generate similar $S_{11}$ parameter curves. Any alteration produced will be identified, which is different from what is found in the CN103630555A patent, which identifies the material in a generic way.

The document US8882670 B2 entitled *"APPARATUS AND METHOD FOR MEASURING CONSTITUENT CONCENTRATIONS WITHIN A BIOLOGICAL TISSUE STRUCTURE"* - presents an apparatus that consists of a VNA and two horn-type antennas coupled together, with the biological tissue inserted between the two antennas. The signal is acquired and the resonant frequencies are determined. By means of signal processing, it is possible to estimate the concentration of the constituents of the analyzed tissue.

The document US6480141 B1 entitled *"DETECTION OF CONTRABAND USING MICROWAVE RADIATION"* - describes a process for identifying contraband in vehicle tires. The equipment uses a VNA and two Horn-type antennas, which are placed one on each side at a certain distance from the tires in the order of centimeters. The signal is transmitted and analyzed in a graph and by the researcher's record, it is identified which values present in the graph determine a tire with air or a tire with foreign bodies inside.

In the above solution, human intervention is mandatory and is only applicable to a vehicle's tire.

In addition to the prior documents US6480141B1, US8882670B2, US8524445B2, they use two antennas to acquire the reflection and transmission readings. By using two antennas, the device has a more complex manufacturing process, greater weight and size. In addition, devices with two antennas require a more complex calibration process and difficult operation, because the greater the number of antennas, the greater the possibility of receiving interference.

Prior art documents WO2006031155A2, CN103630555A, CN105298489A, and US5448501A operate with only one antenna in each, acquiring reflection and phase signals, using antennas not optimized for the radiant near field, which considerably reduces their sensitivity. Certain objects or materials are recognized through specific frequencies, defined by the researcher and in a generic way.

**OBJECTIVES OF THE INVENTION**

The objective of the present invention is to propose a device for comparing the pattern of dielectric materials obtained from the processing of signals reflected from the interaction of electromagnetic waves using the Vivaldi Palm Tree antipodal antenna with an exponential edge, in the frequency range of 1500 to 2500 MHz for determining dielectric characteristics.

The objective of this invention is to propose a device for comparing the pattern of dielectric materials using an antipodal Vivaldi antenna with an exponential edge, capable of identifying and recording the dielectric characteristics of non-metallic materials, such as: a dielectric gas, liquid, solid, or colloidal material, for example: beverages, petroleum derivatives, oxygenated functions (e.g., alcohols), edible oils (e.g., olive oils), non-edible oils (e.g., castor oil, lubricants), powders of various types (such as talc, flour), colloidal materials like greases, waxes, emulsions, pastes, etc.

It is the objective of this invention to propose a device for comparing the pattern of dielectric materials using an antipodal Vivaldi antenna with a high sensitivity exponential edge, of the Vivaldi Palm Tree type, in which the collected and stored dielectric pattern is unique and is only reproduced in readings of the material belonging to the same production batch, which were produced using the same materials. It is a device capable of identifying whether the material or product produced has undergone variations, which have made them divergent from the version that came off the production line.

The objective of this invention is to propose a device for comparing the pattern of dielectric materials using an antipodal Vivaldi antenna, of the Vivaldi Palm Tree type, with an exponential edge that operates over a wider frequency range and does not rely on a researcher to identify which frequencies are responsible for the identification. A pattern is collected by the device, which can be stored and later used for comparison and identification of divergences in the liquid.

The objective of this invention is to propose a device for comparing the pattern of dielectric materials using an antipodal Vivaldi antenna, of the Vivaldi Palm Tree type, with an exponential edge that operates by performing an automated scan, collecting several reflection coefficients at the indicated frequencies, which are part of the $S_{11}$ parameter. By processing this set of frequencies, the pattern is obtained that can be stored by an external program and used in comparison processes.

The objective of this invention is to propose a device for comparing the pattern of dielectric materials using an antipodal Vivaldi antenna, of the Vivaldi Palm Tree type, with an exponential edge whose pattern can be stored by an external program and used in comparison processes, identifying whether it is the same liquid or if it diverges from the collected pattern.

The objective of the present invention is to propose a device for comparing the pattern of dielectric materials using an antipodal Vivaldi antenna, of the Vivaldi Palm Tree type, with an exponential edge that operates with a single antenna positioned a few millimeters from the liquid under analysis. It collects its reflection coefficient over a sequential set of frequencies, which, once processed, forms a pattern that can be stored and used to determine divergence with a subsequent reading of the liquid under analysis.

The objective of this invention is to propose a device for comparing the pattern of dielectric materials using an antipodal Vivaldi antenna, of the Vivaldi Palm Tree type, with a portable exponential edge, eliminating the need for direct power from the electrical grid (battery-powered), and capable of being produced through a less complex industrial process, as it has smaller dimensions, weight, and number of components.

The objective of this invention is to propose a device for comparing the pattern of dielectric materials using an antipodal Vivaldi antenna, of the Vivaldi Palm Tree type, with an exponential edge offering an excellent cost-benefit ratio.

## SUMMARY OF THE INVENTION

The **DEVICE FOR COMPARING THE PATTERN OF DIELECTRIC MATERIALS FROM A VIVALDI ANTIPODAL ANTENNA WITH AN EXPONENTIAL EDGE** uses only one Vivaldi Palm Tree type antenna optimized to work with radiant near-field electromagnetic signals, ranging from 1500 to 2500 MHz with a power of 1dBm, offering greater sensitivity. It collects its reflection coefficients, enhancing a greater number of possibilities in the detection of patterns autonomously, which can be used to identify solid, colloidal, or fluidic material. This serves as a unique standard that allows for verifying the difference between batches of the same material and not just recognizing them in a generic way. The device with a lower power level (1 dBm) prevents potential changes in the characteristics of the material under analysis, making it a non-destructive analysis, allowing for the reuse of the material post-analysis, and even directly coupled to the line in continuous flow processes.

## DESCRIPTION OF THE DRAWINGS

The drawings below are set out for improved explanation of the patent application in an illustrative and non-limiting way:

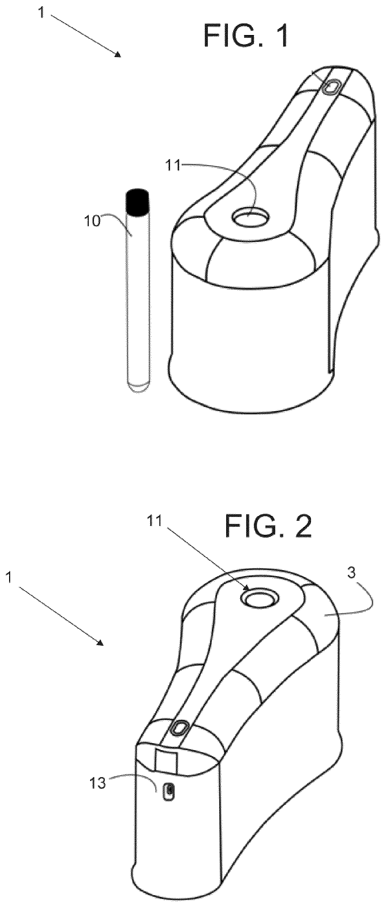

Figure 1: Perspective view of the device for comparing the pattern of dielectric materials using an antipodal Vivaldi antenna with an exponential edge, with the test tube exploded;

Figure 2: Inverted perspective view of a device for comparing the pattern of dielectric materials using an antipodal Vivaldi antenna with an exponential edge;

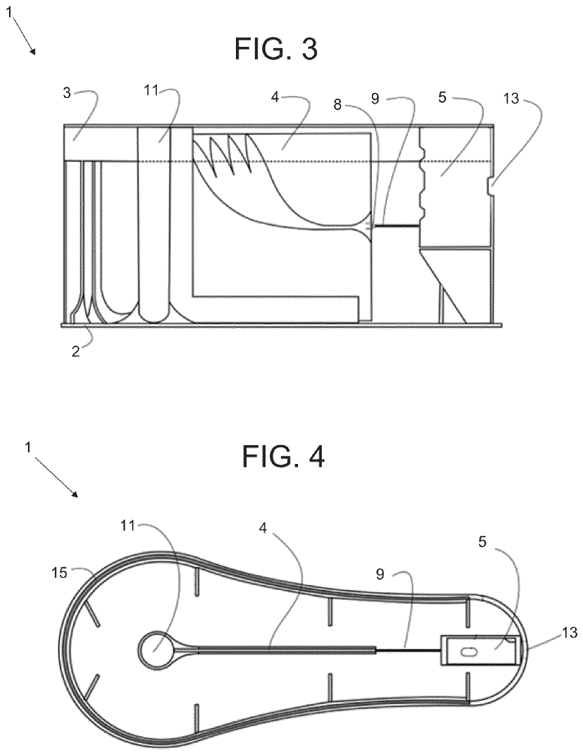

Figure 3: Lateral view in section of a device for comparing the pattern of dielectric materials using an antipodal Vivaldi antenna with an exponential edge;

Figure 4: Cut-out top view of the device for comparison of dielectric material pattern using an antipodal Vivaldi antenna with an exponential edge;

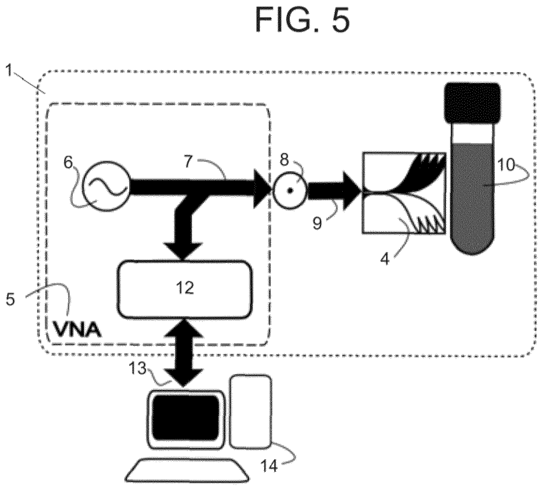

Figure 5: Schematic diagram of the operation of the device for comparing the pattern of dielectric materials using an antipodal Vivaldi antenna with an exponential edge;

Figure 6a: Graphical representation of the $S_{11}$ parameter of a sample read by the device for comparing the pattern of dielectric materials using an antipodal Vivaldi antenna with an exponential edge;

Figure 6b: Computational numerical simulation representation of the electromagnetic waves transmitted by the Vivaldi Palm Tree class antenna for comparing the pattern of dielectric materials using an antipodal Vivaldi antenna with an exponential edge;

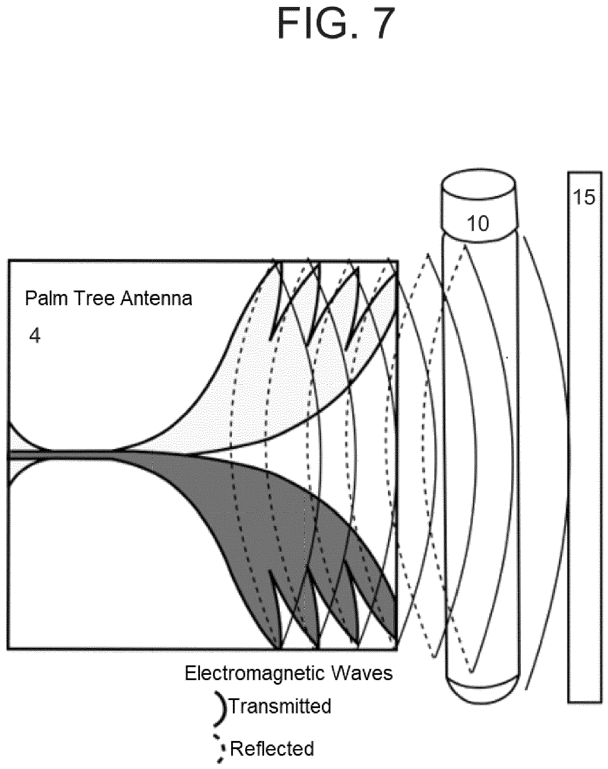

Figure 7: Representation of transmitted and reflected waves in the device for comparison of the pattern of dielectric materials from an antipodal Vivaldi antenna with exponential edge;

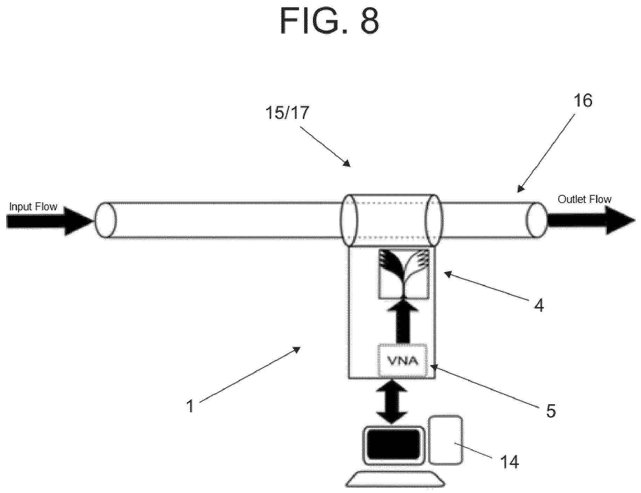

Figure 8: Representation of the device for comparing the pattern of dielectric materials using an antipodal Vivaldi antenna with an exponential edge directly coupled in a continuous flow process line.

## DETAILED DESCRIPTION OF THE INVENTION

THE **DEVICE FOR COMPARING DIELECTRIC MATERIALS PATTERNS USING ANTIPODAL VIVALDI ANTENNA WITH AN EXPONENTIAL EDGE,** the object of this application for patent of invention, consists of a Vivaldi antenna (4) of the Palm Tree class connected to port 1 (8) of a vector network analyzer (5) by a coaxial cable (9). In front of the Vivaldi antenna (4) of the Palm Tree class, a test tube (10) containing dielectric material (liquid under analysis) is inserted, which is identified by its dielectric characteristics through the analysis of the reflection coefficient of an ultra-wideband (UWB) signal ranging from 1500 to 2500 MHz with a power of 1dBm.

More particularly, the claimed invention relates to a device (1) composed of a completely flat lower surface (2) to ensure greater stability and support during its operation, and an upper part (3), both removable, to allow access to the internal components, with emphasis on a Vivaldi antenna (4) of the Palm Tree class, made of FR-4 and measuring 150 x 150 x 1.6 mm$^3$ in volume, connected to a VNA (5) basically composed of a radio frequency signal generator (6) operating in the range of 1500 - 2500 MHz and connected to the input of a coupler (7), which can be passive in the form of a planar micro line coupler or active in the form of a mixer, which is connected through port 1 (8) of the aforementioned VNA (5) that feeds the Vivaldi antenna (4) of the Palm Tree class through the coaxial cable (9), which is directed towards the non-metallic test tube (10) inserted in the cavity (11) of the device (1), the medium under test, containing the liquid under analysis. At the output of the coupler (7), the RF receiver (12) of the VNA (5) is connected, which processes the signal, returning the reflection coefficient, which is obtained through the USB port (13) by the external computer program (14). The set of frequencies with their respective measured reflection coefficients, when processed, form a pattern, which can be stored and used as a reference for future reading and comparison.

The liquid under analysis is a dielectric material and can be applied to solid, colloidal, and gaseous materials. Dielectric material liquid is understood to be any type of liquid that contains organic molecules or any other mineral material dissolved in it, such as oils, fuels, beverages in general, common water, etc. The liquid is identified by its electromagnetic interaction characteristics through the analysis of the reflection coefficient of a radiant near-field ultra-wideband (UWB) signal ranging from 1500 to 2500 MHz with a power of 1dBm.

The device (1) is controlled by the external computer program, which compares the previously stored pattern of the authentic liquid with the pattern collected by the device (1) of the liquid under analysis and determines the percentage of similarity between both patterns, returning as a response to this comparison, three possible states: State 1: PASSED - When the percentage goes from "A%" to 100% equivalence; State 2: ALERT-When the percentage goes from "B%" to "A%" of equivalence; and finally State 3: FAILED - When the percentage of comparison between the previously stored pattern of the authentic liquid and that of the liquid under analysis is below "B%". In this case, the A% and B% values can be defined by the external computer program.

Operationally, the device (1) generates an electromagnetic wave (signal) through the Vivaldi Palm Tree antenna (4), which produces a directive beam that strikes the boundary between the open air (propagation medium $1(\varepsilon_1,\mu_1)$) and the test tube (10) containing the liquid under analysis (propagation medium $2(\varepsilon_2,\mu_2)$), where $z = 0$, perpendicular to the interface between these two media, with $z$ being the signal propagation axis.

Considering that between electrical permittivity ($\varepsilon$) and magnetic permeability ($\mu$), the former, a property of the liquid under analysis, will affect the electromagnetic wave (signal) to a greater order of magnitude. Thus, when considering only the electrical domain of the field intensity of the signal and defining the region $1(\varepsilon_1)$ as the propagation medium in which $z < 0$ and the region $2(\varepsilon_2)$ as the propagation medium in which $z > 0$, with the Vivaldi Palm Tree antenna (4) located in the $1(\varepsilon_1)$ region and the signal traveling in the $+z$ direction, with linear polarization along $x$, then phasorially:

$$E_{xs1}^+(z) = E_{x10}^+ e^{-jk_1 z}\ [v/m]$$

In which $E_{x10}^+$ is real and whose signal travels progressively (+) in the direction of the interface (surface) in $z = 0$, called incident signal and is normal to this surface. A portion of this incident signal can be transmitted (transmitted signal) through the interface at the $z = 0$ boundary, to the $2(\varepsilon_2)$ region, generating a signal, which also travels in the $+z$ direction in the $2(\varepsilon_2)$ region:

$$E_{xs2}^+(z) = E_{x20}^+ e^{-jk_2 z}[v/m]$$

Another signal arises, from the interaction between the incident signal and the interface ($z = 0$), traveling in $1(\varepsilon_1)$, in the $-z$ direction, known as the reflected signal:

$$E_{xs1}^-(z) = E_{x10}^- e^{-jk_1 z}[v/m]$$

Thus, the total electric field strength, considered continuous at $z = 0$, will be:

$$E_{xs1}^+(z) + E_{xs1}^-(z) = E_{xs2}^+(z)\ [v/m]$$

That is, the transmitted signal will be equivalent to the sum of the incident and reflected signals, but since the reflected signal is traveling in $-z$, the transmitted signal will be the difference between the incident and reflected signals. By relating the amplitude of the electric field of the reflected signal with that of the electric field of the incident signal, we have the concept of reflection coefficient ($\Gamma$):

$$\Gamma = \frac{E_{xs1}^{-(z)}}{E_{xs1}^{+(z)}}$$

This relationship is directly linked to the electrical polarization of the liquid under analysis in the $2(\varepsilon_2)$ region, in which the molecules of this liquid will each undergo a dipole moment:

$$\vec{p} = Q\vec{d}\,[Cm]$$

Equivalent to the product of electric charge ($Q$) and the distance ($\vec{d}$) between the center of mass of the polarized regions of the molecule in question. Since there are 'n' molecules per unit volume (electric dipoles or $\Delta v$), the Polarization Vector ($\vec{P}$) can be determined as the dipole moment per unit volume:

$$\vec{P} = \lim_{\Delta v \to 0}\left(\frac{1}{\Delta v}\sum_{i=1}^{n\Delta v}\vec{p}_i\right)\ [C/m^2]$$

This Polarization Vector ($\vec{P}$), being associated with the electric dipoles, is related to the charges of the liquid under analysis in the region $2(\varepsilon_2)$:

$$\vec{P} = \chi\varepsilon_0 E_{xs2}^+(z)\ [C/m^2]$$

In which $X$ is a constant related to the dielectric characteristics of the liquid under analysis, called electrical susceptibility, then the transmitted signal will be:

$$E_{xs2}^+(z) = \vec{P}\frac{1}{\chi\varepsilon_0}\ [v/m]$$

And through these constitutive relationships between the electromagnetic signal and the medium in the $2(\varepsilon_2)$ region, the device obtains the information necessary to identify the liquid under analysis. In this case, when the formula of the liquid under analysis is changed in such a way that the electrical susceptibility of the liquid is altered, the results of the analysis process will be sufficient to demonstrate the probability that the liquid under analysis has been altered.

There are several other interfaces, namely, between the VNA connector (5) and the coaxial cable (5), between the coaxial cable (5) and the antenna connector (4) Vivaldi Palm Tree, between the antenna (4) Vivaldi Palm Tree and the open air, between the open air and the structure of the device (1), a series of electromagnetic interactions will occur (several other reflections). For this reason, and because they are all considered constant, a calibration procedure is adopted so that they are normalized, magnifying only the analysis from the reflected signal of the interface between the air and the liquid under analysis.

As the collected pattern is made through the reflection coefficient, it is mathematically possible to evaluate the behavior of the electromagnetic radiation scattering of the device using S parameters (*Scattering parameters*), as seen in the Scattering Matrix below (DE OLIVEIRA, 2019).

$$\begin{bmatrix} b_1 \\ b_2 \end{bmatrix} = \begin{bmatrix} S_{11} & S_{12} \\ S_{21} & S_{22} \end{bmatrix} \cdot \begin{bmatrix} a_1 \\ a_2 \end{bmatrix}$$

With the scattering matrix, the device (1) and its high-frequency signal can be analyzed. The S-matrix allows for analysis through a two-port network, studying the voltage and current levels at its inputs and outputs, thus making it possible to calculate the normalized signals ($"a_n"$ and $"b_n"$) that represent the complex amplitude of the normalized electromagnetic signals. By means of these parameters, $a_n$ and $b_n$, the incident and reflected powers in each channel are calculated by squaring each term and extracting its modulus. In addition, by means of the ratio of the normalized signals, it is possible to calculate the S parameters, which for a network represented by two ports, are known as:

- $S_{11}$ reflection coefficient at the entry port (port 1) with the exit port (port 2) terminated by a matched load;
- $S_{12}$ reflection coefficient at the exit port with the entry port terminated by a matched load; v $S_{21}$ direct transmission gain (or insertion loss) with the output port terminated by a matched load;
- $S_{22}$ reverse transmission gain (or insertion loss) with the input port terminated by a matched load.

These parameters are described in the "$S_{nm}$" format, where the "$S$" comes from the term *scattering,* where "$n$" is associated with the normalized signal index of the $b_n$ channel and "$m$" is associated with the normalized signal index of the $a_n$ channel. By the ratio of the output ($b_n$) and input ($a_n$) parameters, the scattering parameters can be calculated. It is observed that the scattering matrix can have the number of rows and columns equal to the number of ports of the device under test (DUT). However, it is possible to convert the S-parameters from their standard form to the Decibel scale, which is widely used for analysis of this type of device. To exemplify, the $S_{11}$ conversion is performed by the formula below:

$$|S_{11}| = 20log|S_{11}|[dB]$$

It is also possible through the $S_{11}$ parameters and the characteristic impedance ($Z_O$) used as a reference for the measurements, to calculate the input impedances ($Z$) using the formula below:

$$S_{11} = \frac{Z - Z_O}{Z + Z_O}$$

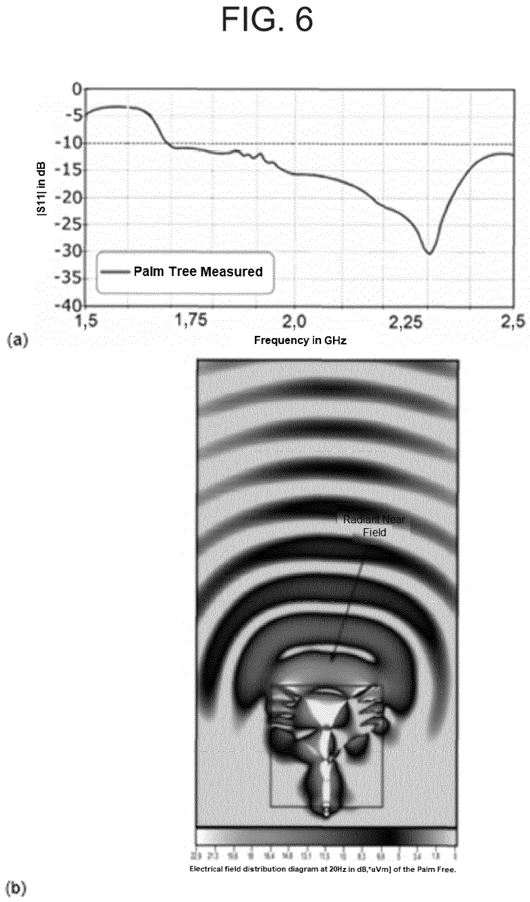

Therefore, as we have seen, through the S parameters it is possible to extract various information and the operation of devices under test. In fact, when obtaining a set of readings of the reflection coefficients as a function of frequency, with the sensitivity available in the Vivaldi Palm Tree class antenna, by positioning the analysis material within the limit of the radiant near field, which occurs immediately after the antenna's exit, as shown in the red region of figure 6b, it is possible to collect the $S_{11}$ parameter in much more detail, as illustrated in figure 6a. The sensitivity of the Vivaldi Palm Tree antenna is so great that this curve presented will only be reproduced with other material from the same production batch. If the same material is used, but from another batch, small changes in the curve will be detected, allowing the product to be identified batch by batch. With this, it is possible to collect, process, and store this pattern in an external program and use it for comparisons to determine whether the analyzed material belongs to a specific batch of the produced material. Additionally, it can identify, through comparison of the generated pattern (the curve), whether the product has undergone any type of alteration, be it due to legal or illegal changes.

The device (1) employs electromagnetic absorber material (15) to coat its entire interior to minimize external electromagnetic interference, and the radiated waves inside the device (1) are absorbed when interacting with this material. This creates a controlled and interference-free internal environment, which enhances reading robustness by preventing incorrect reading due to external interference. The absorber material (15), preferably of the AEP type, with flat laminar geometry and a thickness of 1.9 cm, operates at 21°C with a possible variation of plus or minus 3°C, and a relative humidity of 55%, which can also vary by +/- 15%. It has an absorption capacity greater than -20 dB at frequencies ranging from over 3 GHz to 40 GHz.

The device (1) is capable of performing reference and comparison readings on the production line (16), where the processes are continuous, whether the product is solid, fluid, or colloid passing through the duct (17), as long as it is coated with electromagnetic absorbing material (15) to minimize external electromagnetic noise and radiation from the (4) Vivaldi Palm Tree antenna to the external environment, although the power of the device is very low.

The blades made of electromagnetic absorber material (15) can wrap the packaging of products, of any nature, for the purpose of fulfilling the same objective mentioned earlier, which is to shield the device (1) from external electromagnetic noise to perform the reference reading and standard comparison, expanding the application of the device (1) to readings directly on the packaging of the products, regardless of their form.

**REFERENCES:**

[1]- R. K. Amineh, A. Trehan, and N. K. Nikolova, "TEM horn antenna for ultra-wide band microwave breast imaging," Progress In Electromag. Res., vol. 13, pp. 59-74, Jan 2009.

[2]- R. K. Amineh, et al., "Near-field microwave imaging based on aperture raster scanning with TEM horn antennas," IEEE Trans. on Antennas and Propagation, vol. 59, no. 3, pp. 928-940, Mar. 2011.

[3]- R. C. Johnson, H. A. Ecker, and J. S. Hollis, "Determination of far-field antenna patterns from near-field measurements," Proceedings of the IEEE, vol. 61, no. 12, pp. 1668-1694, Dec. 1973.

[4]- D. Comite et al. "The role of the antenna radiation pattern in the performance of a microwave tomographic approach for GPR imaging." IEEE Journal of Selected Topics in Applied Earth Observations and Remote Sensing vol. 10. no. 10, 4337-4347, 2017.

[5]- A. M. De Oliveira et al. "A Fern Antipodal Vivaldi Antenna for Near-Field Microwave Imaging Medical Applications." IEEE Transactions on Antennas and Propagation, vol. 69, no. 12, pp. 8816-8829, 2021.

[6]- DE OLIVEIRA, Alexandre Maniçoba and JUSTO, João Francisco. Applied Electromagnetism: Vivaldi Antenna for Medical Imaging by Microwave. São Paulo: CDA, 2019. ISBN 978-85-471-0320-0.

**Claims**

1. A **DEVICE FOR COMPARING DIELECTRIC MATERIAL PATTERNS USING ANTIPODAL VIVALDI ANTENNA WITH AN EXPONENTIAL EDGE,** the lower surface (2) completely flat, to ensure greater stability and support during its operation and the upper part (3), both removable to allow access to the internal components, the device comprising a Vivaldi Palm Tree class antenna (4) connected to a VNA (5) composed of a radio frequency signal generator (6) operating in the range of 1500 - 2500 MHz with a power of 1 dBm and connected to the input of a coupler (7), which can be passive in the form of a planar micro line coupler or active in the form of a *mixer,* which is connected through port 1 (8) of the VNA (5) that feeds through the coaxial cable (9) the Vivaldi antenna (4) of the Palm Tree class that is directed to the non-metallic test tube (10) inserted into the cavity (11) of the device (1), medium under test, which contains the liquid under analysis and at the coupler outlet (7) is connected the RF receiver (12) of the VNA (5) which processes the signal returning the reflection coefficient, in the radiant near field, which is obtained through the USB port (13) by the computer program (14); the device (1) employs an electromagnetic absorbing material (15) to coat its entire interior.

2. The **DEVICE FOR COMPARING DIELECTRIC MATERIAL PATTERNS USING ANTIPODAL ANTENNA WITH AN EXPONENTIAL EDGE,** according to claim 1, wherein the device comprises a set of frequencies with their respective measured reflection coefficients, which, when processed, form a pattern that can be stored and used as a reference for future reading and comparison.

3.  The **DEVICE FOR COMPARING DIELECTRIC MATERIAL PATTERNS USING ANTIPODAL VIVALDI ANTENNA WITH AN EXPONENTIAL EDGE,** according to claim 1, wherein the liquid under analysis is a dielectric material that has organic molecules or any other mineral material dissolved in it, such as oils, fuels, beverages in general, common water, among others.

4.  The **DEVICE FOR COMPARING DIELECTRIC MATERIAL PATTERNS USING VIVALDI ANTIPODAL ANTENNA WITH AN EXPONENTIAL EDGE,** according to claim 1, wherein the device comprises an external computer program to compare the previously stored pattern of the authentic liquid with the pattern collected by the device (1) of the liquid under analysis and to determine the percentage of similarity between both patterns.

5.  The **DEVICE FOR COMPARING DIELECTRIC MATERIAL PATTERNS USING ANTIPODAL VIVALDI ANTENNA WITH AN EXPONENTIAL EDGE,** according to claim 1, wherein the device comprises constitutive relationships between the electromagnetic signal and the medium in the region where the signal propagation axis is greater than zero, enabling the device to obtain the necessary information to identify the liquid under analysis.

6.  The **DEVICE FOR COMPARING DIELECTRIC MATERIAL PATTERNS USING ANTIPODAL VIVALDI ANTENNA WITH AN EXPONENTIAL EDGE,** according to claim 5, wherein, when the formula of the liquid under analysis is modified, in such a way that the electrical susceptibility of the liquid is changed, the results of the analysis process will be sufficient to demonstrate the probability that the liquid under analysis has been altered.

7.  The **DEVICE FOR COMPARING DIELECTRIC MATERIAL PATTERNS USING ANTIPODAL VIVALDI ANTENNA WITH AN EXPONENTIAL EDGE,** according to claim 1, wherein the device evaluates the behavior of the electromagnetic radiation scattering of the device, by means of S parameters in the Scattering Matrix.

8.  The **DEVICE FOR COMPARING DIELECTRIC MATERIAL PATTERNS USING VIVALDI ANTIPODAL ANTENNA WITH AN EXPONENTIAL EDGE,** according to claim 1, wherein the device performs reference and comparison reading on the production line (16), where the processes are continuous, whether this product is solid, fluid, or colloid that is passing through the duct (17), as long as it is coated with blades in absorbing material (15).

FIG. 1

1

11

10

FIG. 2

11

1

3

13

# FIG. 3

# FIG. 4

# FIG. 5

# FIG. 6

(a)

Electrical field distribution diagram at 20Hz in dB,*uVm] of the Palm Free.

(b)

# FIG. 7

Palm Tree Antenna
4

15

10

Electromagnetic Waves

) Transmitted

; Reflected

# FIG. 8

15/17

16

Input Flow

Outlet Flow

4

VNA

1

5

14

## INTERNATIONAL SEARCH REPORT

| | International application No. |
| --- | --- |
| | **PCT/BR2022/050330** |

| | | |
| --- | --- | --- |
| **A.** | **CLASSIFICATION OF SUBJECT MATTER** | |
| | G01N 22/00 (2006.01)i; H01Q 1/36 (2006.01); G01S 13/88 (2006.01)<br>CPC: G01N22/00, H01Q1/36, G01S13/88 | |
| According to International Patent Classification (IPC) or to both national classification and IPC | | |

| | |
| --- | --- |
| **B.** **FIELDS SEARCHED** | |
| Minimum documentation searched (classification system followed by classification symbols)<br>G01N 22/00; H01Q 1/36; G01S 13/88 | |
| Documentation searched other than minimum documentation to the extent that such documents are included in the fields searched<br>Base de dados INPI-BR | |
| Electronic data base consulted during the international search (name of data base and, where practicable, search terms used)<br>Derwent Innovation Inex | |

| | |
| --- | --- |
| **C.** **DOCUMENTS CONSIDERED TO BE RELEVANT** | |

| Category* | Citation of document, with indication, where appropriate, of the relevant passages | Relevant to claim No. |
| --- | --- | --- |
| X<br>Y | Palm tree coplanar Vivaldi antenna for near field radar application, N. Nurhayati et al. Microw Opt Technol Lett. 2020;62:964 – 974. (Pages 966-973, figures 2, 9, 11, 12, 13) | 1<br>2-8 |
| Y | CN 109470720 A () 15 March 2019 (2019-03-15)<br>paragraphs [23], [24], [42], [46] | 2-8 |
| A | US 6477474 B2 (SHENZHEN HUAXUN FANGZHOU TERAHERTZ TECH CO LTD) 05 November 2002 (2002-11-05)<br>The whole document | 1-8 |
| A | WO 2006031155 A2 (ROSEMOUNT INC [US]) 23 March 2006 (2006-03-23)<br>The whole document | 1-8 |

| | |
| --- | --- |
| ☐ Further documents are listed in the continuation of Box C. | ☑ See patent family annex. |

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **13 September 2023** | **13 September 2023** |

| Name and mailing address of the ISA/BR | Authorized officer |
| --- | --- |
| **National Institute of Industrial Property (Brazil)**<br>**Rua Mayrink Veiga, 9, 6º andar, CEP 20.090-910 Rio de Janeiro – RJ**<br>**Brazil** | **Manoel Moraes** |
| Telephone No. **(55 21) 3037-3742, 3037-3984** | Telephone No. **+55 21 3037 4528 - 3037 3319** |

Form PCT/ISA/210 (second sheet) (July 2022)

**INTERNATIONAL SEARCH REPORT**
Information on patent family members

International application No.

**PCT/BR2022/050330**

| Patent document cited in search report | | | Publication date (day/month/year) | Patent family member(s) | | | Publication date (day/month/year) |
|---|---|---|---|---|---|---|---|
| CN | 109470720 | A | 15 March 2019 | NONE | | | |
| US | 6477474 | B2 | 05 November 2002 | US | 2002143500 | A1 | 03 October 2002 |
| | | | | AU | 3471300 | A | 07 August 2000 |
| | | | | BR | 0004310 | A | 21 November 2000 |
| | | | | CA | 2323556 | A1 | 27 July 2000 |
| | | | | CN | 1293761 | A | 02 May 2001 |
| | | | | CN | 1227540 | C | 16 November 2005 |
| | | | | DE | 60027644 | D1 | 08 June 2006 |
| | | | | DE | 60027644 | T2 | 12 April 2007 |
| | | | | EP | 1066538 | A1 | 10 January 2001 |
| | | | | EP | 1066538 | B1 | 03 May 2006 |
| | | | | JP | 2002535660 | A | 22 October 2002 |
| | | | | JP | 4282240 | B2 | 17 June 2009 |
| | | | | RU | 2000126484 | A | 10 September 2002 |
| | | | | WO | 0043806 | A1 | 27 July 2000 |
| WO | 2006031155 | A2 | 23 March 2006 | WO | 2006031155 | A3 | 22 June 2006 |
| | | | | EP | 1792167 | A2 | 06 June 2007 |
| | | | | RU | 2004126993 | A | 27 February 2006 |
| | | | | RU | 2283485 | C2 | 10 September 2006 |
| | | | | US | 2008309544 | A1 | 18 December 2008 |

Form PCT/ISA/210 (patent family annex) (July 2022)

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 105298489 A
- US 5448501 A
- US 8524445 B2
- WO 2006031155 A2
- CN 103630555 A
- US 8882670 B2
- US 6480141 B1

**Non-patent literature cited in the description**

- **R. K. AMINEH** ; **A. TREHAN** ; **N. K. NIKOLOVA**. TEM horn antenna for ultra-wide band microwave breast imaging. *Progress In Electromag. Res.*, January 2009, vol. 13, 59-74
- **R. K. AMINEH et al.** Near-field microwave imaging based on aperture raster scanning with TEM horn antennas. *IEEE Trans. on Antennas and Propagation*, March 2011, vol. 59 (3), 928-940
- **R. C. JOHNSON** ; **H. A. ECKER** ; **J. S. HOLLIS**. Determination of far-field antenna patterns from near-field measurements. *Proceedings of the IEEE*, December 1973, vol. 61 (12), 1668-1694
- **D. COMITE et al.** The role of the antenna radiation pattern in the performance of a microwave tomographic approach for GPR imaging. *IEEE Journal of Selected Topics in Applied Earth Observations and Remote Sensing*, 2017, vol. 10 (10), 4337-4347
- **A. M. DE OLIVEIRA et al.** A Fern Antipodal Vivaldi Antenna for Near-Field Microwave Imaging Medical Applications. *IEEE Transactions on Antennas and Propagation*, 2021, vol. 69 (12), 8816-8829
- **DE OLIVEIRA** ; **ALEXANDRE MANIÇOBA** ; **JUSTO, JOÃO FRANCISCO**. Applied Electromagnetism: Vivaldi Antenna for Medical Imaging. Microwave, 2019